# EUROPEAN PATENT APPLICATION

(11) **EP 2 955 679 A1**
(43) Date of publication of application: **16.12.2015**
(21) Application number: 15167888.5
(22) Date of filing: 15.05.2015
(51) Int. Cl.: G06Q 30/02

(54) **VEHICLE ENFORCEMENT SYSTEM**

(30) Priority: 11.06.2014 GB 201410412
(71) Applicant: Tescap Limited, Enfield, Middlesex EN1 3EG (GB)
(72) Inventor: Paul, Clive, Pulloxhill, Bedfordshire MK45 5EU (GB); Canali, Christian, Pulloxhill, Bedfordshire MK45 5EU (GB)
(74) Representative: Instone, Alicia Claire

(57) **Abstract**

This invention relates to a vehicle enforcement system, it is particularly applicable for determining whether a parked vehicle is permitted to park in a particular location, whether a vehicle is not taxed and/or insured or otherwise wanted by the police for other offences. There is provided a vehicle enforcement system and associated method comprising:
a) a mobile camera, the mobile camera being configured to capture an image of a vehicle number plate and communicate the captured image to an automatic number plate recognition system to retrieve the vehicle number mark using optical character recognition;
b) a GPS unit connected to the mobile camera configured to communicate the GPS co-ordinates of the mobile camera when the image is captured;
c) a clock connected to the mobile camera configure to communicate the time when the image is captured;
d) a list of vehicle number marks;
e) a data processer configured to receive the vehicle number mark from the captured image and GPS co-ordinates of the mobile camera at the time the image was captured and compare the same with the list of vehicle number marks and if no match or a match is determined (depending on the contents of the list) highlighting the location of the captured image.

## Description

This invention relates to a vehicle enforcement system, it is particularly applicable for determining whether a parked vehicle is permitted to park in a particular location, whether a vehicle is not taxed and/or insured or otherwise wanted by the police for other offences.

Many systems have existed previously which attempt to provide information to the police and other civil enforcement officers regarding high areas of incidents of non-compliance. Such systems include the concept of heat maps. Heat maps are essentially maps that change colour according to the number of a particular incident occurring. For example an area in which a low number of incidents are occurring might be coloured blue, and an area in which a high number of incidents are occurring might be coloured red. This enables areas to be highlighted in which there might be a high crime rate or a high area of non-compliance for parking. The problem is that these maps are quite crude in their presentation of information, in that they highlight a large area rather than breaking it down to a specific place.

According to a first aspect of the present invention there is provided a vehicle enforcement system comprising:
a) a mobile camera, the mobile camera being configured to capture an image of a vehicle number plate and communicate the captured image to an automatic number plate recognition system to retrieve the vehicle number mark using optical character recognition;
b) a GPS unit connected to the mobile camera configured to communicate the GPS co-ordinates of the mobile camera when the image is captured;
c) a clock connected to the mobile camera configure to communicate the time when the image is captured;
d) a list of vehicle number marks;
e) a data processer configured to receive the vehicle number mark from the captured image and GPS co-ordinates of the mobile camera at the time the image was captured and compare the same with the list of vehicle number marks and if no match is determined highlighting the location of the captured image.

By breaking down the information to highlight a specific area it enables valuable resources such as civil enforcement officers (formerly known as parking attendants) to be allocated much more efficiently to a particular street for example rather than patrolling a large area on foot, which means that less civil enforcement officers are required for the same area.

Preferably the data processer is further configured to provide an overlay superimposed on all images that details the date, time, GPS co-ordinates and frame counter of the captured image.

In one alternative the list comprises a list of vehicle number marks which are allowed to park at pre-defined GPS coordinates.

In another alternative the list comprises a list of vehicle number marks which are allowed to park at pre-defined GPS coordinates and at pre-defined times.

In a further alternative the list comprises a list of vehicle number marks which are insured.

In a further alternative the list comprises a list of vehicle number marks which are taxed.

Preferably the mobile camera is mounted to a vehicle.

According to a second aspect of the present invention there is provided a vehicle enforcement system comprising:
a) a mobile camera, the mobile camera being configured to capture an image of a vehicle number plate and communicate the captured image to an automatic number plate recognition system to retrieve the vehicle number mark using optical character recognition;
b) a GPS unit connected to the mobile camera configured to communicate the GPS co-ordinates of the mobile camera when the image is captured;
c) a clock connected to the mobile camera configure to communicate the time when the image is captured;
d) a list of vehicle number marks;
e) a data processer configured to receive the vehicle number mark from the captured image and GPS co-ordinates of the mobile camera at the time the image was captured and compare the same with the list of vehicle number marks and if a match is determined highlighting the location of the captured image.

Preferably the data processer is further configured to provide an overlay superimposed on all images that details the date, time, GPS co-ordinates and frame counter of the captured image.

In one alternative the list comprises a list of vehicle number marks which are wanted by the police.

Preferably the mobile camera is mounted to a vehicle.

According to a third aspect of the present invention there is provided a vehicle enforcement method comprising:
a) receiving a captured image of a vehicle number plate and using an automatic number plate recognition system to retrieve the vehicle number mark using optical character recognition;
b) receiving GPS co-ordinates of the captured image;
c) receiving time stamp of the captured image;
d) providing a list of vehicle number marks;
e) comparing the retrieved vehicle number mark, GPS co-ordinates and time stamp from the captured image with the list of vehicle number marks and if no match is determined highlighting the location of the captured image.

Preferably the method further comprises providing an overlay superimposed on all images that details the date, time, GPS co-ordinates and frame counter of the captured image.

In one alternative the list comprises a list of vehicle number marks which are allowed to park at pre-defined GPS coordinates.

In another alternative the list comprises a list of vehicle number marks which are allowed to park at pre-defined GPS coordinates and at pre-defined times.

In a further alternative the list comprises a list of vehicle number marks which are insured.

In a further alternative the list comprises a list of vehicle number marks which are taxed.

Preferably the method further comprises allocating a civil enforcement officer to check the highlighted location to determine if an offence has been committed.

According to a fourth aspect of the present invention there is provided a vehicle enforcement method comprising:
a) receiving a captured image of a vehicle number plate and using an automatic number plate recognition system to retrieve the vehicle number mark using optical character recognition;
b) receiving GPS co-ordinates of the captured image;
c) receiving time stamp of the captured image;
d) providing a list of vehicle number marks;
e) comparing the retrieved vehicle number mark, GPS co-ordinates and time stamp from the captured image with the list of vehicle number marks and if a match is determined highlighting the location of the captured image.

Preferably the method further comprises providing an overlay superimposed on all images that details the date, time, GPS co-ordinates and frame counter of the captured image.

In one alternative the list comprises a list of vehicle number marks which are wanted by the police.

Preferably the method further comprises allocating a civil enforcement officer to check the highlighted location to determine if an offence has been committed.

According to a fifth aspect of the present invention there is provided a computer program embedded in a computer readable media that when executed by a device causes the device to perform the parking enforcement method according to the third or fourth aspects of the present invention.

Other aspects and features of the present invention will become apparent to those ordinarily skilled in the art upon review of the following description of specific embodiments of the invention.

The present invention according to one embodiment comprises a parking enforcement system. The parking enforcement system comprising:
a) a mobile camera, the mobile camera being configured to capture an image of a vehicle registration plate and communicate the captured image to an automatic number plate recognition system to retrieve the vehicle registration mark using optical character recognition;
b) a GPS unit connected to the mobile camera configured to communicate the GPS co-ordinates of the mobile camera when the image is captured;
c) a clock connected to the mobile camera configure to communicate the time when the image is captured;
d) a list of vehicle registration marks which are permitted to park at pre-defined GPS coordinates and at pre-defined times;
e) a data processor configured to receive the vehicle number mark from the captured image and GPS co-ordinates of the mobile camera at the time the image was captured and compare the same with the list of vehicle number marks which are allowed to park at pre-defined GPS coordinates and if no match is determined highlight the location of the captured image.

Preferably the data processer is further configured to provide an overlay superimposed on all images that details the date, time, GPS co-ordinates and frame counter of the captured image.

In one alternative the mobile camera is mounted to a vehicle, however, in the alternative the mobile camera may be a hand held device.

Further in the alternative the system may make use of the camera, GPS unit and clock present in mobile phones, tablets, PDAs and other hand held devices where these features are present.

The captured image and associated GPS and time stamp are communicated to the data processer by a wireless means such as 3G, 4G, Wi-Fi or other suitable means. The parking enforcement system in one embodiment is used to enforce parking restrictions on residential roads. Quite often a Council will allocate parking restrictions on certain roads at certain times of the day. It may be that on certain roads that no one is allowed to park, however on other roads it may be that certain residents are allowed to park.

Roads are allocated corresponding GPS co-ordinates, times at which parking restrictions are in force and an authorised list of vehicle registration marks (if any) which can be parked on the particular road whilst parking restrictions are in force.

Only residents authorised to park on a particular road will be put on the authorised list. Any other vehicle registration mark will flag an alert and highlight the location of the captured image on the compliance display map for the civil enforcement officer or traffic warden to investigate.

When being used by a local council the system can be used to provide data and allocate resources effectively within a Borough. For example the system can be configured to provide accurate and detailed information of where the highest levels of non-compliance are (i.e. people parked where they are not allowed to park) as well as providing reporting tools for mangers to act on this information and prevent non-compliance within their boundaries.

According to another embodiment of the present invention there is provided a parking enforcement method comprising:
a) receiving a captured image of a vehicle number plate and using an automatic number plate recognition system to retrieve the vehicle number mark using optical character recognition;
b) receiving the GPS co-ordinates of the captured image;
c) receiving the time when the image is captured;
d) providing a list of vehicle number marks which are permitted to park at pre-defined GPS coordinates and at pre-defined times;
e) comparing the retrieved vehicle number mark, GPS co-ordinates and time from the captured image with the list of vehicle number marks which are allowed to park at pre-defined GPS coordinates and if no match is determined highlighting the location of the captured image.

In an alternative the method further comprises providing an overlay superimposed on all images that details the date, time, GPS co-ordinates and frame counter of the captured image.

In one alternative the method is carried out by computer software

The computer software comprises an overview page configured to provide an overview of what mobile cameras in the form of hand held devices and vehicles as well as civil enforcement officers that are deployed along with their location. The overview page also provides a summary of all potential violations triggered as well as their location. As well as providing the information in list form, the information is also provided visually on a map.

Further information about a mobile camera, civil enforcement officer, or potential violation can be obtained by clicking on each of the icons indicating their location on the map.

It is possible to filter the information provided on the map so that only pending results are shown (i.e. those potential violations that have not yet been investigated by a civil enforcement officer) or discarded (i.e. the potential violation has been investigate and no violation had taken place) or accepted (i.e. a civil enforcement officer has picked up the potential violation for further investigation).

By filtering the information provided, reports can be generated which provide the user a clear indication as to what is occurring within the boundaries that the parking enforcement system and method are in operation.

It is also possible to use the software to filter the information by the mobile camera that had communicated the information. By choosing a mobile camera from the list it is possible to display the date and time that the camera has been operational between along with the route taken by the mobile camera. It is also possible to display the list of mobile cameras that have been assigned for particular date and to display a mobile camera's last location and route.

It is also possible to view the locations of all the civil enforcement officers being used for the parking enforcement. The civil enforcement officers are tracked using the GPS signal from handheld devices which they carry. The system tracks the location of the civil enforcement officers to enable allocation of a possible violation to the closest civil enforcement officers. In addition it is possible, for a particular date and time to display the route that the civil enforcement officers followed.

Furthermore the system can be configured to create a route that you want a mobile camera to follow. The routes can be either assigned to a day, or a week. In the event that a mobile camera deviates from prescribed route an alarm is raised. It is possible to integrate some leeway before the alarm is raised in the event there are road closures which necessitate a detour from the prescribed route.

In addition controlled parking zones can be created. The use of such controlled parking zones allows for the system to only download databases for a particular region based upon GPS co-ordinates. Once the mobile camera approaches a controlled parking zone it automatically polls a server for the latest database of authorized vehicle registration marks or it individually checks each vehicle registration mark from the database to ensure accuracy.

The software can also configured to check the number of violations collected by each vehicle and the total no of jobs by each civil enforcement officer. It can also display the violation status changes. (For example. Vehicle ADZ222 received the violation and it has been assigned to John Smith (Handheld civil enforcement officer). For reporting purposes all information is retained and management reports can be generated on any area of concern using the search function. Such reports can include how useful a vehicle is in a certain area and whether civil enforcement officers are performing their duties.

Alternative embodiments of the invention include the system and method for detecting uninsured and/or untaxed vehicles, or even vehicles wanted by the police for other offences.

## Claims

**1.** A vehicle enforcement system comprising:
a) a mobile camera, the mobile camera being configured to capture an image of a vehicle number plate and communicate the captured image to an automatic number plate recognition system to retrieve the vehicle number mark using optical character recognition;
b) a GPS unit connected to the mobile camera configured to communicate the GPS co-ordinates of the mobile camera when the image is captured;
c) a clock connected to the mobile camera configure to communicate the time when the image is captured;
d) a list of vehicle number marks;
e) a data processer configured to receive the vehicle number mark from the captured image and GPS co-ordinates of the mobile camera at the time the image was captured and compare the same with the list of vehicle number marks and if no match is determined highlighting the location of the captured image.

**2.** A vehicle enforcement system as claimed in Claim 1 wherein the list comprises a list of vehicle number marks which are allowed to park at pre-defined GPS coordinates.

**3.** A vehicle enforcement system as claimed in Claim 1 wherein the list comprises a list of vehicle number marks which are allowed to park at pre-defined GPS coordinates and at pre-defined times.

**3.** A vehicle enforcement system as claimed in any preceding claim wherein the list comprises a list of vehicle number marks which are insured.

**4.** A vehicle enforcement system as claimed in any preceding claim wherein a further alternative the list comprises a list of vehicle number marks which are taxed.

**5.** A vehicle enforcement system as claimed in Claim 1 wherein the list comprises a list of vehicle number marks which are wanted by the police.

**6.** A vehicle enforcement system as claimed in any preceding claim the mobile camera is mounted to a vehicle.

**7.** A vehicle enforcement method comprising:
a) receiving a captured image of a vehicle number plate and using an automatic number plate recognition system to retrieve the vehicle number mark using optical character recognition;
b) receiving GPS co-ordinates of the captured image;
c) receiving time stamp of the captured image;
d) providing a list of vehicle number marks;
e) comparing the retrieved vehicle number mark, GPS co-ordinates and time stamp from the captured image with the list of vehicle number marks and if no match is determined highlighting the location of the captured image.

**8.** A vehicle enforcement method as claimed in Claim 7 wherein the list comprises a list of vehicle number marks which are allowed to park at pre-defined GPS coordinates.

**9.** A vehicle enforcement method as claimed in Claim7 wherein the list comprises a list of vehicle number marks which are allowed to park at pre-defined GPS coordinates and at pre-defined times.

**10.** A vehicle enforcement method as claimed in Claim 7, Claim 8 or Claim 9 wherein the list comprises a list of vehicle number marks which are insured.

**11.** A vehicle enforcement method as claimed in any of claims 7 to 10 wherein the list comprises a list of vehicle number marks which are taxed.

**12.** A vehicle enforcement method as claimed in Claim 7 wherein the list comprises a list of vehicle number marks which are wanted by the police.

**13.** A vehicle enforcement method as claimed in any of claims 7 to 12 further comprising allocating a civil enforcement officer to check the highlighted location to determine if an offence has been committed.

**14.** A computer program embedded in a computer readable media that when executed by a device causes the device to perform the vehicle enforcement method according any of claims 7 to 13.
